# EUROPEAN PATENT SPECIFICATION

(11) **EP 3 382 981 B1**
(45) Date of publication and mention of the grant of the patent: **06.01.2021**
(21) Application number: 17305390.1
(22) Date of filing: 31.03.2017
(51) Int. Cl.: H04L 29/06, H04W 12/02, H04W 84/12, H04L 29/12

(54) **A USER EQUIPMENT AND METHOD FOR PROTECTION OF USER PRIVACY IN COMMUNICATION NETWORKS**
BENUTZERGERÄT UND VERFAHREN ZUM SCHUTZ VON BENUTZERDATENSCHUTZ IN KOMMUNIKATIONSNETZEN
ÉQUIPEMENT UTILISATEUR ET PROCÉDÉ DE PROTECTION DE LA CONFIDENTIALITÉ DE L'UTILISATEUR DANS DES RÉSEAUX DE COMMUNICATION

(43) Date of publication of application: 03.10.2018
(73) Proprietor: Nokia Technologies Oy, 02610 Espoo (FI)
(72) Inventor: Mathur, Akhil, Dublin, 15 (IE); Zakrzewska, Anna, Dublin, 15 (IE)
(74) Representative: Novagraaf Technologies

(56) References cited:
- WO-A1-2016/032386
- US-A1- 2011 066 756
- US-A1- 2015 103 776

## Description

### Field of the invention

The present invention relates to a user equipment to be used for communication with an access point in a communication network, and a corresponding communication method, with a view of protecting user privacy.

The invention finds an application particularly in wireless communication networks such as Wi-Fi communication network.

### Background of the invention

End-user privacy in wireless communication networks, specifically focusing on Wi-Fi, is an important issue. As a matter of fact, with the growing popularity of Internet of Things (IoT) devices and home-automation solutions, Wi-Fi is expected to play an even bigger role than it currently has in communication networks. For example, products such as health-care tracking products are either currently using Wi-Fi, or are likely to use WiFi in the future as a communication medium to send data to the cloud.

As such, it is of utmost importance to provide not only seamless connectivity but also high privacy levels with these technologies, as both are equally important for end-user experience and trust.

If we consider the current technology landscape, high privacy precautions and solutions are available in the application layer (e.g. browsers cookie blockers, do-not-track browsers, TOR proxies) to prevent others from learning a user's location or browsing habits. Further, in the cellular networks also, strong privacy precautions are provided. In the Long Term Evolution (LTE) technology for example, the hardware related identifiers, i.e. International Mobile Equipment Identity (IMEI) and International Mobile Subscriber Identity (IMSI), are stored in the user equipment and deep in the network in Home Subscriber Server (HSS). For security and privacy reasons the need for exchanging them is kept at minimum.

A Globally Unique Temporary Identifier (GUTI), which allows for global identification but does not reveal identity is created for use in the core network, and a variety of Radio Network Temporary Identifiers (RNTIs) are used for the communication between a user equipment and a base station such as an evolved Node B (eNB).

However, this is not the case for Wi-Fi communication network. In the past, significant attention has been paid on security risks in wireless communications. For example, unsecured Wi-Fi networks can be snooped upon by malicious users and user identity theft attacks are possible. However, very little attention has been paid to protecting user privacy in Wi-Fi networks.
The price of using the often free service is the user privacy. When users browse any content on the web (e.g. news, email, sports), all the data traffic passing through a Wi-Fi access point is associated with a unique hardware identifier, namely the Media Access Control (MAC) address of the user equipment. This makes it very easy to steal the privacy of a user. An attacker who has access to the Wi-Fi access point can easily filter the traffic by MAC address, and then create a very accurate user profile by aggregating and co-relating the various Points-Of-Interests (POIs) as revealed by their traffic history. There have been numerous works which have shown that just by looking at a user's URL history, deeply private characteristics could be inferred such as demographics, gender, age (see J. Hu, H.-J. Zeng, H. Li, C. Niu, and Z. Chen. Demographic prediction based on user's browsing behavior. WWW '07; see also R. Jones, R. Kumar, B. Pang, and A. Tomkins. "I know what you did last summer": query logs and user privacy. In Proceedings of the sixteenth ACM conference on Conference on information and knowledge management, CIKM '07), and political views (see I. Weber, V. R. K. Garimella, and E. Borra. Mining web query logs to analyze political issues. In Proceedings of the 3rd Annual ACM Web Science Conference, 2012).

Similarly, an attacker can aggregate and co-relate the various health metrics originating from a health tracker device (e.g. heart-rate, blood pressure), and infer very personal health information (e.g. diseases, lifestyle) about a user.

To summarize the problem, lack of proper privacy protection schemes and hardware identifier exposure in Wi-Fi networks make it vulnerable to privacy leaks. And with the growing popularity of IoT devices such as health wearables, which are likely to use Wi-Fi to communicate very personal data to the cloud, it becomes very critical to design a solution which can improve the user privacy in wireless communication networks such as Wi-Fi networks.

Some solutions to the above problems are known at the level of application layer (e.g. browsers cookie blockers, do-not-track browsers, TOR proxies) as mentioned above, but not at the level of communication networks. Said solutions at the level of application layer are not sufficient to prevent privacy attacks at the network (protocol) layer or data link layer.

We know the solution of MAC randomization/spoofing to protect user's location history (see Apple Inc., Randomized Wi-Fi address, [Available Online, August 11^{th}, 2016], https://www.apple.co m/privacy/privacy-built-in; see also [5] Pry-Fi application, [Available Online, August 11^{th}, 2016], https://play.google.com/store/apps/details?id=eu.chainfire.pryfi; see again Wireless Mac Address Changer, [Available Online, August 11^{th}, 2016], https://play.google.com/storc/apps/details?id=com.wireless.macchanger).

In this solution, the operative system randomizes the MAC address of the user equipment in the wireless probe requests, due to which it becomes infeasible to track a user's visit across multiple locations. However, the MAC randomization is only restricted to wireless probes (which are used for access point association) and not to actual data packets sent from the user equipment. As soon as the user equipment gets successfully associated with an access point and starts the data communication, it uses its original MAC address, without any randomization. Moreover, the functionality is not always available, as specific conditions must be met to activate it (see 9 To 5 Mac,[ Available Online, August 11^{th}, 2016], http://9to5mac.com/2014/09/26/more-details-on-how-ios-8s-mac-address-randomization-feature-works-and-when-it-doesnt/).

There is a technical reason why MAC randomization is not feasible when user equipment is associated to the access point and is doing data communication. If the MAC address changes during the session, it will cause the access point to establish a new connection with the user equipment and issue it a new IP address. The issuing of a new IP address every few seconds is obviously not desirable, and it can also adversely affect the user experience with web-based apps. For example, when some apps detect user traffic coming from multiple IP addresses, they flag the corresponding user as a possible spammer.

Therefore, the aforementioned problem of user privacy due to the aggregating and co-relating POIs according to MAC address still remains.

Similarly, other dedicated applications for the purpose of MAC spoofing are available. They change the MAC address randomly whenever a device is not connected to a Wi-Fi network. These applications have often limited applicability to certain devices and require additional software to be installed. The main drawback is, however, that MAC spoofing does not entirely protect users' privacy since despite a changed MAC address, all information that is exchanged while using it may be connected to create a POI profile.

Document WO 2016/032386 discloses a method in a wireless communication network for notifying a communication device if context storing is employed or not by a network node in association with MAC addresses.

### Summary of the invention

One of the aim of the invention is therefore to address the shortcomings of the existing solutions as explained above.

To this end, the invention proposes a user equipment and a method that utilizes content-based identifier randomization and adaptation which nullifies the possibility of creating a POI profile, thus protecting users' privacy to a higher extend, as defined in the independent claims. Additional features of the invention are provided in the dependent claims.

With the software-based solution of the invention to protect users' privacy in wireless networks, different software-defined virtual identifiers (such as MAC addresses) are created on the user equipment, based on the category of content requested by the user, and different content type are decoupled, which makes creating a POI profile impossible.

This way, if an attacker gets access to the access point and tries to filter traffic by an identifier (MAC address), he will only see user traffic about one category assigned to this identifier, and not about any other category of interest to the user. Therefore, it becomes infeasible for the attacker to aggregate multiple points-of-interest for a particular user and do a privacy attack.

Further, the problems with frequent MAC randomization that has been discussed here above do not occur with the solution of the invention. Indeed, the virtual identifier assigned to a category remains the same for the duration of a session. This will be explained in more details and illustrated with an example discussing the privacy threats below. Then we will demonstrate how these threats can be prevented by implementing the solution of the invention.

Indeed, when compared to the currently existing solution such as the ones based on MAC randomisation, the advantages of the invention are twofold:
- it fully prevents from creating a POI, as the mix of data exchanged by the user is separated and sent using different MAC addresses;
- it does not require session interruption to change MAC addresses, which is less disturbing and does not affect the service quality.

Each category is allocated a dedicated identifier, which can be changed between different flows of the same type to increase the level of privacy protection.

### Drawings

The invention and its advantages may be better understood by referring to the description which follows, given as example and for illustrative purpose only, and by referring to the accompanying drawings listed below:
- figure 1: schematic representation of a user equipment according to the invention;
- figure 2: schematic representation of the method according to the invention;
- figure 3: example of snapshot of the traffic passing through an access point from a user equipment and with the method according to the invention.

### Detailed description

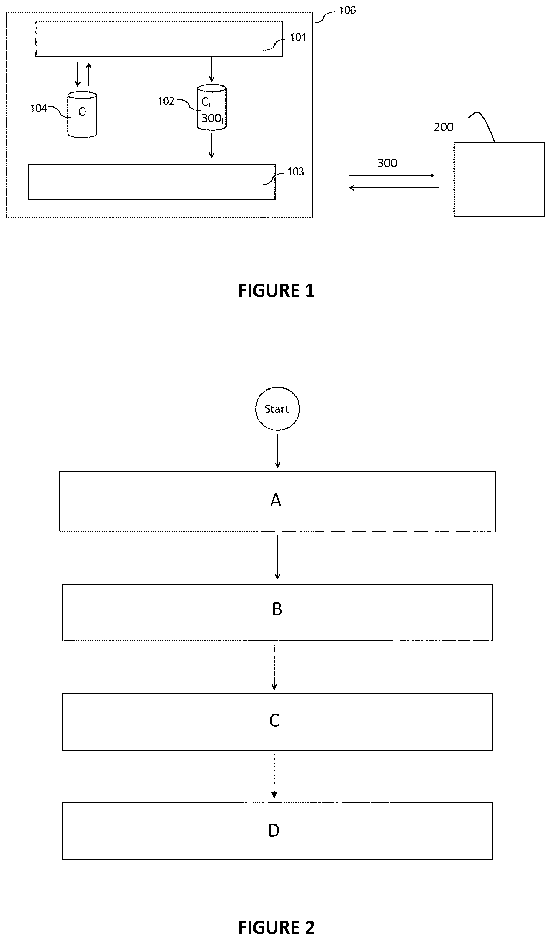

Without loss of generality, we are considering in the present description the case of a user equipment 100 connecting to a Wi-Fi access point 200, as shown in figure 1.

Let us consider the case of a user connecting with a user equipement to a WiFi access point daily for web browsing in *New York* at his workplace, leaving in *Manhattan* and with interests including *salsa dancing, tennis, art* and *Italian food.* Hence these categories are expected to appear in the web browsing traffic of the user. As we discussed, all the data traffic originating from the user equipment is tagged with the user equipment MAC address as unique identifier.

First, we describe below how user's privacy could be compromised if someone is able to hack the Wi-Fi access point at the user's workplace and see all the traffic passing through it (or, in case of an unsecured access point, by simply snooping on the traffic).

The attackers can use packet analysis tools such as Wireshark to filter all the Transmission, Control Protocol (TCP) data packets containing the same MAC address. Next, they can analyze the content of the corresponding HyperText Transfer Protocol (HTTP) packets to analyze user interests. In our user's case above, they are likely to see HTTP Uniform Resource Locator (URLs) related to {*New York, Manhattan, salsa dancing, tennis, art, Italian food*}.

If they were only able to see just one of the user's interests (e.g. say *New York*), they would have no way to distinctly identify the user as there are many different people with interests including *New York.* But here, because of the common MAC address across all of the user's data traffic, they can see all his interests, co-relate them and create a targeted user's profile which may deeply reveal personal characteristics such as demographics, gender, age.

A possible attack could be to crawl publicly available geo-tagged tweets or Foursquare data, and co-relate items on {*New York, Manhattan, salsa dancing, tennis, art, Italian food*} which could potentially identify the user. Further, as the number of POIs collected from the user's traffic increases, the likelihood of uniquely identifying this user increases. More importantly again, even if the user is using privacy preserving tools in the application layer (e.g. in the browser used to access the web), he is still vulnerable to privacy attacks at the communication layer (i.e. Wi-Fi).

Now, we highlight how the solution of the invention protects user privacy, in the example of the Wi-Fi network.

As can be seen in figure 1, the user equipment 100 communicates with the access point 200, which is an access point of a Wi-Fi network in our example.

The user equipment 100 comprises at least one processing unit (not represented) and a memory unit 102, 104 comprising databases 102 and 104 which will be described further below. The memory unit 102, 104 also stores program instructions which, when processed by the processing unit, implement all or part of the method of the invention.

The user equipment 100 further comprises a communication interface 101, 103 for data communication with the access point 200 under control of the processing unit. In our example, the communication interface 101, 103 comprises an application layer 101 and a communication layer 103.

The application layer 101 may comprise one or more specific operating systems and/or one or more browsers, through which a user of the user equipment 100 can access network services, for example browsing the internet.

The communication layer 103 allows the user to communicate with the access point 200 through a determined communication protocol.

The communication interface 101, 103 is thus configured to use an identifier 300 stored in the memory of the user equipment 100, such that any data communication sent by the communication interface 101, 103 through its communication layer 103 to the access point 200, is associated with said identifier 300, therefore identified at the access point 200 by this identifier 300. For example, any data request from the user represented by a URL address entered via the application layer 101 of the communication interface 101, 103, is associated with an identifier 300.

According to the invention, the memory unit 102, 104 further comprises a category-to-identifier database 102 in which one or more virtual identifiers 300ᵢ are stored each associated with a specific content category Cᵢ.

The communication interface 101, 103 is further configured to determine, through the application layer 101, which specific content category Cᵢ a determined data to be sent to the access point 200 belongs to.

The communication interface 101, 103 then obtain from the category-to-identifier database 102 the virtual identifier 300ᵢ corresponding to the specific content category Cᵢ which the determined data belongs to, and allocate to the determined data this virtual identifier 300ᵢ as identifier 300 to be used by the communication layer 103 for transmission of the determined data to the access point 200.

This determination of the specific content category Cᵢ corresponding to a determined data, obtaining the corresponding virtual identifier 300ᵢ in the category-to-identifier database 102, allocating this virtual identifier 300ᵢ to be used as identifier 300 for all data communication related to the corresponding category Cᵢ, corresponds to step C in figure 2.

Thus, the application layer 101 sends a message to the communication layer 103 on the user equipment 100 to use the virtual identifier 300ᵢ, in our example the virtual MAC address, in the header of the WLAN packets associated with the current content request.

The memory unit 102, 104 also comprises a category database 104 where are stored content categories Cᵢ specific to a user. These content categories (Cᵢ) are determined by the communication interface 101, 103, through its application layer 101.

For determination of the content categories Cᵢ specific to the user, the communication interface 101, 103 can analyze the user specific data traffic history and/or the user private profile stored in the memory unit, for example through a keyword analysis.

Other techniques may be used this analysis, such as direct URL addresses analysis, in the case where data requests are in the form of URL addresses, for example based on manual labeling or clustering.

This determination of the content categories Cᵢ specific to the user, and storing these categories Cᵢ in the category database 104, corresponds to step A in figure 2.

For identifying and determining the key content categories Cᵢ for a user, one may analyze the local URL history at the application layer 101 using ontology Application Programing Interfaces (APIs) which provide a URL-to-category relationship. Such a technique typically involves a keyword analysis and a database query, and is, as such, very lightweight and fully capable of running locally on a mobile device such as the user equipment 100.

By analyzing the entire local URL history of the user, this step A results in identifying all the categories Cᵢ of interest to said user. However, to ensure that the less important or less frequent categories are not part of the identifier virtualization step B explained below, the implementation could choose the k most prominent categories or in another case, or ask the user to vote on which categories are important to him from a privacy perspective.

The communication interface 101, 103 is then configured to rank the determined content categories Cᵢ from the most to the less frequent one, and to use in the category-to-identifier database 102 only the first k categories Cᵢ, k being a predetermined integer.

The communication interface 101, 103 may thus also be configured to allow the user to select a subset of categories amongst the determined categories Cᵢ, and to use in the category-to-identifier database 102 only this subset of categories.

For example, the user may choose *salsa dancing* as a more personal category than *New York.*

Besides, the categories Cᵢ need not be fixed and coarse-grained. They can be learned based on user's private profile on the user equipment 100 and can potentially be different for each user. Further, new categories can be added with time.

Let's say that, after this step A, the system has identified {*Manhattan, salsa dancing, tennis, art, Italian food*} as the key content categories Cᵢ for preserving the user's privacy, which are now stored in the category database 104 on the user equipment 100.

When the user requests content on any of the categories Cᵢ identified in Step A (e.g. *tennis*), the application layer 101 (operating system or web browser) of the communication interface 101, 103 can query the local category-to-identifier database 102 on the user equipment 100 to find the identifier, or MAC address in our example, entry 300ᵢ corresponding to category type Cᵢ=*tennis.* If no entry is found, a new virtual MAC address (e.g. *'tennis*': MAC A: 00:0a:95:9d:68:11) is generated, and stored in the category-to-identifier database 102.

Thus, the communication interface 101, 103 is configured to randomly generate a virtual identifier 300ᵢ for each of the categories Cᵢ stored in the category database 104, or at least a part of these categories Cᵢ, and to store these virtual identifiers 300ᵢ in the category-to-identifier database 102.

The above is performed at step B as shown in figure 2.

It is feasible to assign multiple MAC addresses to one Network Interface Controller (NIC). The system must ensure that each virtual MAC address is unique within the local area network (LAN), because a MAC address conflict within the LAN can prevent user equipments from being assigned an IP address by the access point. MAC conflict within a LAN is highly unlikely as there are 2²⁴ unique MAC addresses possible for each hardware vendor.

Nevertheless, to address a possible conflict, we assume that an access point already has a mechanism implemented to detect a duplicate MAC request, and refuse connection to the user equipment corresponding to the duplicate MAC request.

If a user equipment has generated a random MAC address 'X' which happens to be a conflict with another MAC on the same LAN, when the user equipment tries to establish a connection with the access point using 'X', the access point can refuse to assign it an IP address due to MAC conflict. If the user equipment does not get an IP address within a time threshold, it will generate another random MAC and retry establishing a connection until it receives an IP address from the access point. As we highlighted above, MAC conflict is a highly unlikely scenario (probability = 1 / 2²⁴). It is therefore reasonable to expect that a user equipment will succeed in getting an IP address in 1 or 2 attempts.

Similarly, for the user's other content requests (e.g. on *art* or *Italian food* in our example), the application layer 101 of the communication interface 101, 103 will ensure that different identifiers are allocated to the WLAN packets from different content types. Any future content requests on a category Cᵢ will always be assigned the same identifier in the WLAN packets, unless randomization is employed as explained below concerning step D of figure 2.

At step D, the communication interface 101, 103 performs a random generation of a virtual identifier 300ᵢ for each, or at least a part, of the categories Cᵢ stored in the category database 104, and store these virtual identifiers 300ᵢ in the category-to-identifier database 102, at occurrence of predetermined events, which could correspond to traffic flow termination.

These predetermined events may be for example: the turning off of the user equipment 100, the disconnection of the user equipment 100 from the communication network, or the logout from a determined service.

Thanks to this virtual identifier randomization, higher level of privacy protection is ensured without interrupting the flow continuity.

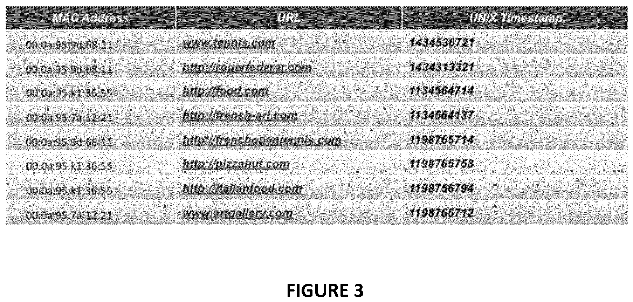

If we examine the example of snapshot of the traffic flowing through the access point, as shown in figure 3, the various content preferences of the user are no longer linked to each other by a common MAC address.

In this example, the first column corresponds to virtual identifiers 300ᵢ in the form of MAC addresses, the second column corresponds to content request in the form of URLs, and the third column registers timestamps of each of the content requests from the user.

As can been seen, all the data requests, or content requests, made by a user and related to a specific category Cᵢ have been allocated a corresponding identifier 300ᵢ which is different to the identifier allocated any other data request related to another category Cᵢ.

In our example, we assume that the following categories Cᵢ have been identified and stored in the category database 104 (step A), and associated each with a distinct virtual identifier 300ᵢ in the category-to-identifier database 102 (step B): {*New York, Manhattan, salsa dancing, tennis, art, Italian food*}.

Consequently, the 1st, 2nd and 5th data requests have been identified as belonging to the category *Tennis* and allocated the distinct virtual identifier (MAC address) *00:0a:95:9d:68:11.* The 3rd, 6th and 7th data requests have been identified as belonging to the category *Italian Food* and allocated the distinct virtual identifier (MAC address) *00:0a:95:k1:36:55.* And finally, the 4th and 8th data requests have been identified as belonging to the category *Art* and allocated the distinct virtual identifier (MAC address) *00:0a:95:7a:12:21.*

Hence, an attacker will not be able to create a privacy-invasive profile of the user by MAC filtering and packet analysis.

Also, there will be no adverse effect on the data communication between the user equipment 100 and the internet. As the MAC address and corresponding IP address will remain consistent throughout a session for each content type (and similarly each individual application), there will be no visibility of this technique to the over-the-top (OTT) content providers. Therefore, the problems of being flagged as a spammer by the OTT for repeatedly changing IP addresses etc. will not emerge.

In another embodiment, one considers the example of smart-device for tracking user's health metrics as the user equipment 100, such as a multipurpose health-care tracking IoT device.

In this example, the user equipment 100 may comprise sensors to measure heart-rate, blood pressure, weight, and sleep duration. When this user equipment 100 sends the data to a wireless access point over Wi-Fi, an attacker can co-relate all health metrics originating from a given MAC address as identifier 300, and create a unique profile of a user's healthcare metrics which can be used in various negative ways (e.g. it can reveal information on a user's diseases or lifestyle to the attacker).

With the solution of the invention, the user equipment 100 assigns a separate randomized virtual MAC address 300ᵢ to each health-care metric. For example, heart-rate will have MAC = x, blood pressure will have MAC = y, and so on. This way, even if an attacker hacks the Wi-Fi access point 200, he will only see a single health metric associated with a MAC address, thereby not being able to create a targeted health profile of the user.

The above description has been directed to specific embodiments of this invention which is, however, not limited to these embodiments described for purpose of example only. It will be apparent for the man of the art that other variations and modifications may be made to the described embodiments, with obtaining some or all of their advantages. Therefore, it is the object of the appended claims to cover all such variations and modifications.

## Claims

1. A user equipment (100) for data communication in a wireless communication network, such as a Wi-Fi communication network, comprising at least one access point (200), the user equipment (100) comprising:
a processing unit;
a memory unit (102, 104);
a communication interface (101, 103) for data communication with said access point (200) under control of said processing unit, said communication interface (101, 103) being configured to use an identifier (300) stored in the memory (102, 104) such that any data communication sent by the communication interface (101, 103) to the access point (200), is associated with said identifier (300),
wherein the memory unit (102, 104) further comprises a category-to-identifier database (102) in which one or more virtual identifiers (300ᵢ) are stored each associated with a specific content category (Ci) determined through the application layer, the communication interface (101, 103) being further configured to:
determine, through the application layer, which specific content category (Cᵢ) a determined data to be sent to the access point (200) belongs to;
obtain from the category-to-identifier database (102) the virtual identifier (300ᵢ) corresponding to the specific content category (Cᵢ) which the determined data belongs to,
and allocate to said determined data said virtual identifier (300ᵢ) as identifier (300) to be used for transmission of said determined data to the access point (200).

2. User equipment (100) according to claim 1, wherein the memory unit (102, 104) comprises a category database (104), and the communication interface (101, 103) is further configured to determine one or more content categories (Cᵢ) specific to a user, and to store said categories (Cᵢ) into the category database (104).

3. User equipment (100) according to claim 2, wherein, for determination of the content categories (Cᵢ) specific to a user, the communication interface (101, 103) is configured for analyzing a user specific data traffic history.

4. User equipment (100) according to any of claims 2 and 3, wherein, for determination of the content categories (Cᵢ) specific to a user, the communication interface (101, 103) is configured for analyzing a user private profile stored in the memory unit.

5. User equipment (100) according to any of claims 3 and 4, wherein the data traffic history and/or private profile analysis is a keyword analysis.

6. User equipment (100) according to any of claims 2 to 5, wherein the communication interface (101, 103) is configured to rank the determined content categories (Cᵢ) from the most to the less frequent one, and to use in the category-to-identifier database (102) only the first k categories (Cᵢ), k being a predetermined integer.

7. User equipment (100) according to any of claims 2 to 6, wherein the communication interface (101, 103) is configured to allow the user to select a subset of categories amongst the determined categories (Cᵢ), and to use in the category-to-identifier database (102) only the said subset of categories.

8. User equipment (100) according to any of claims 2 to 7, wherein the communication interface (101, 103) is configured to randomly generate a virtual identifier (300ᵢ) for at least a subset of each of the categories (Cᵢ) stored in the category database (104), and to store said virtual identifiers (300ᵢ) in the category-to-identifier database (102).

9. User equipment (100) according to claim 8, wherein the communication interface (101, 103) is configured to randomly generate a virtual identifier (300ᵢ) for at least a subset of each of the categories (Cᵢ) stored in the category database (104), and to store said virtual identifiers (300ᵢ) in the category-to-identifier database (102), at occurrence of predetermined events.

10. User equipment (100) according to claim 9, wherein predetermined events comprise: turning off of the user equipment (100); disconnection of the user equipment (100) from the communication network; logout from a determined service.

11. A method for data communication between a user equipment (100) and an access point (200) in a wireless communication network, such as a Wi-Fi communication network, the user equipment (100) comprising a memory unit (102, 104), a processing unit, and a communication interface (101, 103) for data communication with said access point (200) under control of said processing unit, the method comprising using an identifier (300) stored in the memory (102, 104) such that any data communication sent by the communication interface (101, 103) to the access point (200), is associated with said identifier (300),
wherein the method performed by the user equipment further comprises:
determining, through the application layer, which specific content category (Cᵢ) a determined data to be sent to the access point (200) belongs to;
obtaining, from a category-to-identifier database (102) stored in the memory unit (102, 104) and containing one or more virtual identifiers (300ᵢ) each associated with a specific content category (Cᵢ) determined through the application layer, a virtual identifier (300ᵢ) corresponding to the specific content category (Cᵢ) which the determined data belongs to,
and allocating to said determined data said virtual identifier (300ᵢ) as identifier (300) to be used for transmission of said determined data to the access point (200).

12. Method according to claim 11, further comprising determining one or more content categories (Cᵢ) specific to a user, and storing said categories (Cᵢ) into a category database (104) in the memory unit (102, 103).

13. Method according to claim 12, wherein determining the content categories (Cᵢ) specific to a user comprises analyzing a user specific data traffic history.

14. Method according to any of claims 12 and 13, wherein determining the content categories (Cᵢ) specific to a user comprises analyzing a user private profile stored in the memory unit.

15. Method according to any of claims 13 and 14, wherein the data traffic history and/or private profile analysis is a keyword analysis.

16. Method according to any of claims 12 to 15, further comprising ranking the determined content categories (Cᵢ) from the most to the less frequent one, and using in the category-to-identifier database (102) only the first k categories, k being a predetermined integer.

17. Method according to any of claims 12 to 16, further comprising allowing the user to select a subset of categories amongst the determined categories (Cᵢ), and using in the category-to-identifier database (102) only the said subset of categories.

18. Method according to any of claims 12 to 17, further comprising randomly generating a virtual identifier (300ᵢ) for at least a subset of each of the categories (Cᵢ) stored in the category database (104), and storing said virtual identifiers (300ᵢ) in the category-to-identifier database (102).

19. Method according to claim 18, further comprising randomly generating a virtual identifier (300ᵢ) for at least a subset of each of the categories (Cᵢ) stored in the category database (104), and storing said virtual identifiers (300ᵢ) in the category-to-identifier database (102), at occurrence of predetermined events.

20. Method according to claim 19, wherein predetermined events comprise: turning off of the user equipment (100); disconnection of the user equipment (100) from the communication network; logout from a determined service.

## Patentansprüche

1. Teilnehmereinrichtung (100) für eine Datenkommunikation in einem drahtlosen Kommunikationsnetzwerk, wie etwa einem Wi-Fi-Kommunikationsnetzwerk, das mindestens einen Zugangspunkt (200) umfasst, wobei die Teilnehmereinrichtung (100) Folgendes umfasst:
eine Verarbeitungseinheit;
eine Speichereinheit (102, 104);
eine Kommunikationsschnittstelle (101, 103) für eine Datenkommunikation mit dem Zugangspunkt (200) unter der Steuerung der Verarbeitungseinheit, wobei die Kommunikationsschnittstelle (101, 103) dazu ausgelegt ist, eine Kennung (300), die im Speicher (102, 104) gespeichert ist, zu verwenden, derart, dass jede Datenkommunikation, die von der Kommunikationsschnittstelle (101, 103) an den Zugangspunkt (200) gesendet wird, mit der Kennung (300) verknüpft ist,
wobei die Speichereinheit (102, 104) ferner eine Kategorie-zu-Kennung-Datenbank (102) umfasst, in der eine oder mehrere virtuelle Kennungen (300ᵢ) gespeichert sind, von denen jede mit einer spezifischen Inhaltskategorie (Cᵢ) verknüpft ist, die durch die Anwendungsschicht bestimmt wird, wobei die Kommunikationsschnittstelle (101, 103) ferner zu Folgendem ausgelegt ist:
Bestimmen durch die Anwendungsschicht, zu welcher spezifischen Inhaltskategorie (Cᵢ) Daten, die an den Zugangspunkt (200) zu senden sind, gehören;
Erhalten der virtuellen Kennung (300ᵢ), die der spezifischen Inhaltskategorie (Cᵢ) entspricht, zu der die bestimmten Daten gehören, von der Kategorie-zu-Kennung-Datenbank (102),
Zuweisen der virtuellen Kennung (300ᵢ) zu den bestimmten Daten als Kennung (300), die für eine Übertragung der bestimmten Daten zum Zugangspunkt (200) zu verwenden ist.

2. Teilnehmereinrichtung (100) nach Anspruch 1, wobei die Speichereinheit (102, 104) eine Kategoriedatenbank (104) umfasst und die Kommunikationsschnittstelle (101, 103) ferner dazu ausgelegt ist, eine oder mehrere Inhaltskategorien (Cᵢ), die für einen Benutzer spezifisch sind, und die Kategorien (Cᵢ) in der Kategoriedatenbank (104) zu speichern.

3. Teilnehmereinrichtung (100) nach Anspruch 2, wobei die Kommunikationsschnittstelle (101, 103) zur Bestimmung der Inhaltskategorien (Cᵢ), die für einen Benutzer spezifisch sind, zum Analysieren eines benutzerspezifischen Datenverkehrsverlaufs ausgelegt ist.

4. Teilnehmereinrichtung (100) nach einem der Ansprüche 2 und 3, wobei die Kommunikationsschnittstelle (101, 103) zur Bestimmung der Inhaltskategorien (Cᵢ), die für einen Benutzer spezifisch sind, zum Analysieren eines privaten Benutzerprofils, das in der Speichereinheit gespeichert ist, ausgelegt ist.

5. Teilnehmereinrichtung (100) nach einem der Ansprüche 3 und 4, wobei die Analyse des Datenverkehrsverlaufs und/oder des privaten Profils eine Schlüsselwortanalyse ist.

6. Teilnehmereinrichtung (100) nach einem der Ansprüche 2 bis 5, wobei die Kommunikationsschnittstelle (101, 103) dazu ausgelegt ist, die bestimmten Inhaltskategorien (Ci) von der häufigsten bis zu der am wenigsten häufigen einzustufen und in der Kategorie-zu-Kennung-Datenbank (102) nur die ersten k Kategorien (Cᵢ) zu verwenden, wobei k eine vorbestimmte Ganzzahl ist.

7. Teilnehmereinrichtung (100) nach einem der Ansprüche 2 bis 6, wobei die Kommunikationsschnittstelle (101, 103) dazu ausgelegt ist, es dem Benutzer zu erlauben, aus den bestimmten Kategorien (Cᵢ) einen Untersatz von Kategorien auszuwählen, und in der Kategorie-zu-Kennung-Datenbank (102) nur den Untersatz von Kategorien zu verwenden.

8. Teilnehmereinrichtung (100) nach einem der Ansprüche 2 bis 7, wobei die Kommunikationsschnittstelle (101, 103) dazu ausgelegt ist, für mindestens einen Untersatz von jeder der Kategorien (Cᵢ), die in der Kategoriedatenbank (104) gespeichert sind, zufällig eine virtuelle Kennung (300ᵢ) zu erzeugen und die virtuellen Kennungen (300ᵢ) in der Kategorie-zu-Kennung-Datenbank (102) zu speichern.

9. Teilnehmereinrichtung (100) nach Anspruch 8, wobei die Kommunikationsschnittstelle (101, 103) dazu ausgelegt ist, für mindestens einen Untersatz von jeder der Kategorien (Cᵢ), die in der Kategoriedatenbank (104) gespeichert sind, zufällig eine virtuelle Kennung (300ᵢ) zu erzeugen und die virtuellen Kennungen (300ᵢ) bei Eintreten von vorbestimmten Ereignissen in der Kategorie-zu-Kennung-Datenbank (102) zu speichern.

10. Teilnehmereinrichtung (100) nach Anspruch 9, wobei vorbestimmte Ereignisse Folgendes umfassen: Ausschalten einer Teilnehmereinrichtung (100); Trennen der Teilnehmereinrichtung (100) vom Kommunikationsnetzwerk; Abmelden von einem bestimmten Dienst.

11. Verfahren für eine Datenkommunikation zwischen einer Teilnehmereinrichtung (100) und einem Zugangspunkt (200) in einem drahtlosen Kommunikationsnetzwerk, wie etwa einem Wi-Fi-Kommunikationsnetzwerk, wobei die Teilnehmereinrichtung (100) eine Speichereinheit (102, 104), eine Verarbeitungseinheit und eine Kommunikationsschnittstelle (101, 103) für eine Datenkommunikation mit dem Zugangspunkt (200) unter der Steuerung der Verarbeitungseinheit umfasst, wobei das Verfahren das Verwenden einer Kennung (300), die im Speicher (102, 104) gespeichert ist, umfasst, derart, dass jede Datenkommunikation, die von der Kommunikationsschnittstelle (101, 103) an den Zugangspunkt (200) gesendet wird, mit der Kennung (300) verknüpft ist,
wobei das Verfahren, das von der Teilnehmereinrichtung durchgeführt wird, ferner Folgendes umfasst:
Bestimmen durch die Anwendungsschicht, zu welcher spezifischen Inhaltskategorie (Cᵢ) Daten, die an den Zugangspunkt (200) zu senden sind, gehören;
Erhalten einer virtuellen Kennung (300ᵢ), die der spezifischen Inhaltskategorie (Cᵢ) entspricht, zu der die bestimmten Daten gehören, von einer Kategorie-zu-Kennung-Datenbank (102), die in der Speichereinheit (102, 104) gespeichert ist und eine oder mehrere virtuelle Kennungen (300ᵢ) enthält, von denen jede mit einer spezifischen Inhaltskategorie (Cᵢ) verknüpft ist, die durch die Anwendungsschicht bestimmt wird,
Zuweisen der virtuellen Kennung (300ᵢ) zu den bestimmten Daten als Kennung (300), die für eine Übertragung der bestimmten Daten zum Zugangspunkt (200) zu verwenden ist.

12. Verfahren nach Anspruch 11, das ferner das Bestimmen von einer oder mehreren Inhaltskategorien (Cᵢ), die für einen Benutzer spezifisch sind, und das Speichern der Kategorien (Cᵢ) in einer Kategoriedatenbank (104) in der Speichereinheit (102, 103) umfasst.

13. Verfahren nach Anspruch 12, wobei das Bestimmen der Inhaltskategorien (Cᵢ), die für einen Benutzer spezifisch sind, das Analysieren eines benutzerspezifischen Datenverkehrsverlaufs umfasst.

14. Verfahren nach einem der Ansprüche 12 und 13, wobei das Bestimmen der Inhaltskategorien (Cᵢ), die für einen Benutzer spezifisch sind, das Analysieren eines privaten Benutzerprofils, das in der Speichereinheit gespeichert ist, umfasst.

15. Verfahren nach einem der Ansprüche 13 und 14, wobei die Analyse des Datenverkehrsverlaufs und/oder des privaten Profils eine Schlüsselwortanalyse ist.

16. Verfahren nach einem der Ansprüche 12 bis 15, das ferner das Einstufen der bestimmten Inhaltskategorien (Cᵢ) von der häufigsten zu der am wenigsten häufigen und das Verwenden nur der ersten k Kategorien in der Kategorie-zu-Kennung-Datenbank (102) umfasst, wobei k eine vorbestimmte Ganzzahl ist.

17. Verfahren nach einem der Ansprüche 12 bis 16, das ferner umfasst, dass es dem Benutzer erlaubt ist, aus den bestimmten Kategorien (Cᵢ) einen Untersatz von Kategorien auszuwählen, sowie das Verwenden nur des Untersatzes von Kategorien in der Kategorie-zu-Kennung-Datenbank (102).

18. Verfahren nach einem der Ansprüche 12 bis 17, das ferner das zufällige Erzeugen einer virtuellen Kennung (300ᵢ) für mindestens einen Untersatz von jeder der Kategorien (Cᵢ), die in der Kategoriedatenbank (104) gespeichert sind, und das Speichern der virtuellen Kennungen (300ᵢ) in der Kategorie-zu-Kennung-Datenbank (102) umfasst.

19. Verfahren nach Anspruch 18, das ferner das zufällige Erzeugen einer virtuellen Kennung (300ᵢ) für mindestens einen Untersatz von jeder der Kategorien (Cᵢ), die in der Kategoriedatenbank (104) gespeichert sind, und das Speichern der virtuellen Kennungen (300ᵢ) bei Eintreten von vorbestimmten Ereignissen in der Kategorie-zu-Kennung-Datenbank (102) umfasst.

20. Verfahren nach Anspruch 19, wobei vorbestimmte Ereignisse Folgendes umfassen: Ausschalten einer Teilnehmereinrichtung (100); Trennen der Teilnehmereinrichtung (100) vom Kommunikationsnetzwerk; Abmelden von einem bestimmten Dienst.

## Revendications

1. Equipement utilisateur (100) de communication de données dans un réseau de communication sans fil, tel qu'un réseau de communication Wi-Fi, comprenant au moins un point d'accès (200), l'équipement utilisateur (100) comprenant :
une unité de traitement ;
une unité de mémoire (102, 104) ;
une interface de communication (101, 103) pour la communication de données, ledit point d'accès (200) étant sous le contrôle de ladite unité de traitement, ladite interface de communication (101, 103) étant configurée pour utiliser un identifiant (300) stocké dans la mémoire (102, 104) de sorte que toute communication de données envoyée par l'interface de communication (101, 103) au point d'accès (200) soit associée audit identifiant (300),
dans lequel l'unité de mémoire (102, 104) comprend en outre une base de données de catégories/identifiants (102) dans laquelle un ou plusieurs identifiants virtuels (300ᵢ) sont stockés, chacun étant associé à une catégorie (Cᵢ) de contenu spécifique déterminée par l'intermédiaire de la couche application, l'interface de communication (101, 103) étant en outre configurée pour :
déterminer, par l'intermédiaire de la couche application, à quelle catégorie (Cᵢ) de contenu spécifique appartient une donnée déterminée devant être envoyée au point d'accès (200) ;
obtenir, à partir de la base de données de catégories/identifiants (102), l'identifiant virtuel (300ᵢ) correspondant à la catégorie (Cᵢ) de contenu spécifique à laquelle appartient la donnée déterminée,
et attribuer ledit identifiant virtuel (300ᵢ) à ladite donnée déterminée, comme identifiant (300) devant être utilisé pour la transmission de ladite donnée déterminée au point d'accès (200).

2. Equipement utilisateur (100) selon la revendication 1, dans lequel l'unité de mémoire (102, 104) comprend une base de données des catégories (104), et l'interface de communication (101, 103) est en outre configurée pour déterminer une ou plusieurs catégories (Cᵢ) de contenu spécifique à un utilisateur, et pour stocker lesdites catégories (Cᵢ) dans la base de données des catégories (104).

3. Equipement utilisateur (100) selon la revendication 2, dans lequel, pour la détermination des catégories (Cᵢ) de contenu spécifique à un utilisateur, l'interface de communication (101, 103) est configurée pour analyser un historique de trafic de données spécifiques à l'utilisateur.

4. Equipement utilisateur (100) selon l'une des revendications 2 et 3, dans lequel, pour la détermination des catégories (Cᵢ) de contenu spécifique à un utilisateur, l'interface de communication (101, 103) est configurée pour analyser un profil privé d'utilisateur stocké dans l'unité de mémoire.

5. Equipement utilisateur (100) selon l'une des revendications 3 et 4, dans lequel l'analyse de l'historique de trafic de données et/ou du profil privé est une analyse par mots-clés.

6. Equipement utilisateur (100) selon l'une des revendications 2 à 5, dans lequel l'interface de communication (101, 103) est configurée pour classer les catégories (Cᵢ) de contenu déterminées de la plus fréquente à la moins fréquente, et pour utiliser, dans la base de données de catégories/identifiants (102), uniquement les k premières catégories (Cᵢ), k étant un nombre entier prédéterminé.

7. Equipement utilisateur (100) selon l'une des revendications 2 à 6, dans lequel l'interface de communication (101, 103) est configurée pour permettre à l'utilisateur de sélectionner un sous-ensemble de catégories parmi les catégories (Cᵢ) déterminées, et pour utiliser, dans la base de données de catégories/identifiants (102), uniquement ledit sous-ensemble de catégories.

8. Equipement utilisateur (100) selon l'une des revendications 2 à 7, dans lequel l'interface de communication (101, 103) est configurée pour générer de manière aléatoire un identifiant virtuel (300ᵢ) pour au moins un sous-ensemble de chacune des catégories (Cᵢ) stockée dans la base de données des catégories (104), et pour stocker lesdits identifiants virtuels (300ᵢ) dans la base de données de catégories/identifiants (102).

9. Equipement utilisateur (100) selon la revendication 8, dans lequel l'interface de communication (101, 103) est configurée pour générer de manière aléatoire un identifiant virtuel (300ᵢ) pour au moins un sous-ensemble de chacune des catégories (Cᵢ) stockée dans la base de données des catégories (104), et pour stocker lesdits identifiants virtuels (300ᵢ) dans la base de données de catégories/identifiants (102), lors de l'occurrence d'événements prédéterminés.

10. Equipement utilisateur (100) selon la revendication 9, dans lequel les événements prédéterminés comprennent : la mise hors tension de l'équipement utilisateur (100) ; la déconnexion de l'équipement utilisateur (100) du réseau de communication ; la fermeture de session d'un service déterminé.

11. Procédé de communication de données entre un équipement utilisateur (100) et un point d'accès (200) dans un réseau de communication sans fil, tel qu'un réseau de communication Wi-Fi, l'équipement utilisateur (100) comprenant une unité de mémoire (102, 104), une unité de traitement, et une interface de communication (101, 103) pour la communication de données, ledit point d'accès (200) étant sous le contrôle de ladite unité de traitement, le procédé comprenant l'utilisation d'un identifiant (300) stocké dans la mémoire (102, 104) de sorte que toute communication de données envoyée par l'interface de communication (101, 103) au point d'accès (200) soit associée audit identifiant (300),
dans lequel le procédé effectué par l'équipement utilisateur comprend en outre :
la détermination, par l'intermédiaire de la couche application, de la catégorie (Cᵢ) de contenu spécifique à laquelle appartient une donnée déterminée devant être envoyée au point d'accès (200) ;
l'obtention, à partir d'une base de données de catégories/identifiants (102) stockée dans l'unité de mémoire (102, 104) et contenant un ou plusieurs identifiants virtuels (300ᵢ) associés chacun à une catégorie (Cᵢ) de contenu spécifique déterminée par l'intermédiaire de la couche application, d'un identifiant virtuel (300ᵢ) correspondant à la catégorie (Cᵢ) de contenu spécifique à laquelle appartient la donnée déterminée,
et l'attribution dudit identifiant virtuel (300ᵢ) à ladite donnée déterminée, comme identifiant (300) devant être utilisé pour la transmission de ladite donnée déterminée au point d'accès (200).

12. Procédé selon la revendication 11, comprenant en outre la détermination d'une ou plusieurs catégories (Cᵢ) de contenu spécifique à un utilisateur, et le stockage desdites catégories (Cᵢ) dans une base de données des catégories (104) dans l'unité de mémoire (102, 103).

13. Procédé selon la revendication 12, dans lequel la détermination des catégories (Cᵢ) de contenu spécifique à un utilisateur comprend l'analyse d'un historique de trafic de données spécifiques à l'utilisateur.

14. Procédé selon l'une des revendications 12 et 13, dans lequel la détermination des catégories (Cᵢ) de contenu spécifique à un utilisateur comprend l'analyse d'un profil privé d'utilisateur stocké dans l'unité de mémoire.

15. Procédé selon l'une des revendications 13 et 14, dans lequel l'analyse de l'historique de trafic de données et/ou du profil privé est une analyse par mots-clés.

16. Procédé selon l'une des revendications 12 à 15, comprenant en outre le classement des catégories (Cᵢ) de contenu déterminées de la plus fréquente à la moins fréquente, et l'utilisation, dans la base de données de catégories/identifiants (102), uniquement des k premières catégories, k étant un nombre entier prédéterminé.

17. Procédé selon l'une des revendications 12 à 16, comprenant en outre la possibilité pour l'utilisateur de sélectionner un sous-ensemble de catégories parmi les catégories (Cᵢ) déterminées, et l'utilisation, dans la base de données de catégories/identifiants (102), uniquement dudit sous-ensemble de catégories.

18. Procédé selon l'une des revendications 12 à 17, comprenant en outre la génération aléatoire d'un identifiant virtuel (300ᵢ) pour au moins un sous-ensemble de chacune des catégories (Cᵢ) stockée dans la base de données des catégories (104), et le stockage desdits identifiants virtuels (300ᵢ) dans la base de données de catégories/identifiants (102).

19. Procédé selon la revendication 18, comprenant en outre la génération aléatoire d'un identifiant virtuel (300ᵢ) pour au moins un sous-ensemble de chacune des catégories (Cᵢ) stockée dans la base de données des catégories (104), et le stockage desdits identifiants virtuels (300ᵢ) dans la base de données de catégories/identifiants (102), lors de l'occurrence d'événements prédéterminés.

20. Procédé selon la revendication 19, dans lequel les événements prédéterminés comprennent : la mise hors tension de l'équipement utilisateur (100) ; la déconnexion de l'équipement utilisateur (100) du réseau de communication ; la fermeture de session d'un service déterminé.
